# EUROPÄISCHE PATENTSCHRIFT

(11) **EP 2 534 003 B1**
(45) Veröffentlichungstag und Bekanntmachung des Hinweises auf die Patenterteilung: **26.07.2017**
(21) Anmeldenummer: 11745951.1
(22) Anmeldetag: 08.08.2011
(51) Int. Cl.: B60Q 3/76, F21V 5/00, B60Q 3/44

(54) **LESELEUCHTE FÜR KRAFTFAHRZEUGE**
READING LIGHT FOR MOTOR VEHICLES
LAMPE DE LECTURE POUR VÉHICULES AUTOMOBILES

(30) Priorität: 27.08.2010 DE 102010039859
(43) Veröffentlichungstag der Anmeldung: 19.12.2012
(73) Patentinhaber: OSRAM GmbH, 80807 München (DE)
(72) Erfinder: FREI, Ulrich, 93083 Obertraubling (DE); MUSCHAWECK, Julius, 82131 Gauting (DE); SPERLING, Bernard, 83620 Westerham (DE)
(86) Internationale Anmeldenummer: PCT/EP2011/063608
(87) Internationale Veröffentlichungsnummer: WO 2012/025363

(56) Entgegenhaltungen:
- WO-A1-2009/153347
- DE-U1- 29 919 032
- US-A1- 2008 143 259
- US-B1- 6 424 786

## Beschreibung

### Technologischer Hintergrund

Die Erfindung betrifft eine Leseleuchte für den Innenraum von Kraftfahrzeugen. Derartige Leseleuchten sind üblicherweise in dem Dachhimmel des Kraftfahrzeugs integriert und erzeugen nach dem Einschalten einen eng begrenzten Lichtkegel auf der Fahrer- oder Beifahrerseite des Kraftfahrzeugs um beispielsweise nach Eintritt der Dämmerung das lesen einer Landkarte oder dergleichen im Kraftfahrzeug zu ermöglichen. Als Lichtquelle wird in derartigen Leseleuchten üblicherweise eine Glühlampe verwendet, die zusammen mit einem Reflektor einen eng begrenzten Lichtkegel generiert. Glühlampen haben allerdings den Nachteil einer vergleichsweise geringen Lebensdauer.

Eine gattungsgemäße Leseleuchte für den Innenraum von Kraftfahrzeugen wird im WO 2009/153347 A1 offenbart.

### Darstellung der Erfindung

Es ist Aufgabe der Erfindung, eine Leseleuchte für den Innenraum von Kraftfahrzeugen mit einer Lichtquelle mit längerer Lebensdauer bereitzustellen.

Diese Aufgabe wird durch eine Leseleuchte mit den Merkmalen aus dem Anspruch 1 gelöst. Besonders vorteilhafte Ausführungen der Erfindung sind in den abhängigen Ansprüchen beschrieben.

Die erfindungsgemäße Leseleuchte für den Innenraum von Kraftfahrzeugen besitzt mehrere Leuchtdioden, die auf einer Montageplatte angeordnet sind, und mehrere konische Lichtleiter, wobei jeder konische Lichtleiter eine, mindestens einer Leuchtdiode zugewandte Lichteinkoppelfläche und eine Lichtauskoppelfläche aufweist, sowie eine Licht streuende Scheibe, welche die Lichtauskoppelflächen der konischen Lichtleiter abdeckt und die den Lichtauskoppelflächen der konischen Lichtleiter zugeordnete, mit Mikrolinsen versehene Abschnitte besitzt.

Durch die Verwendung von Leuchtdioden anstelle einer Glühlampe weist die Lichtquelle der erfindungsgemäßen Leseleuchte eine längere Lebensdauer als die Lichtquelle herkömmlicher Leseleuchten auf. Da bei der erfindungsgemäßen Leseleuchte mehrere Leuchtdioden als Lichtquelle kombiniert werden und diese Leuchtdioden zusammen mit konischen Lichtleitern verwendet werden, welche die Divergenz des von den Leuchtdioden emittierten Lichts reduzieren, und weiterhin eine Licht streuende Scheibe vorgesehen ist, wird mit der erfindungsgemäßen Leseleuchte hinsichtlich Lichtbündelung, Beleuchtungsstärke und Lichthomogenität ein vergleichbar gutes Resultat wie mit einer herkömmlichen Leseleuchte erreicht. Die Licht streuende Scheibe der erfindungsgemäßen Leseleuchte besitzt mit Mikrolinsen versehene Abschnitte, die der Lichtauskoppelfläche jeweils eines konischen Lichtleiters zugeordnet sind. Die mit Mikrolinsen versehenen Abschnitte bewirken eine Streuung des aus den Lichtauskoppelflächen der konischen Lichtleiter austretenden Lichts und ermöglichen dadurch eine Mischung und Homogenisierung des von den Leuchtdioden emittierten Lichts.

Um im Fernfeld vor der erfindungsgemäßen Leseleuchte ein gutes Ergebnis bei der Mischung und Homogenisierung des von allen Leuchtdioden emittierten Lichts zu erzielen, sind die Mikrolinsen der einzelnen Licht streuenden, mit Mikrolinsen versehenen Abschnitte der Licht streuenden Scheibe jeweils in einer hexagonalen Struktur angeordnet, wobei die hexagonalen Strukturen der verschiedenen, mit Mikrolinsen versehenen Abschnitte gegeneinander verdreht angeordnet sind.

Die Kombination von mehreren Leuchtdioden mit den vorgenannten konischen Lichtleitern und der Licht streuende Scheibe erlaubt es, Leuchtdioden aus unterschiedlichen Fertigungschargen mit entsprechend unterschiedlichen Lichtemissionseigenschaften in der erfindungsgemäßen Leseleuchte als Lichtquelle zu verwenden, weil das von diesen Leuchtdioden emittierte Licht mittels der konischen Lichtleiter und der Licht streuende Scheibe im Fernfeld gemischt und homogenisiert wird, so dass weißes Licht der gewünschten Farbtemperatur bzw. der gewünschten Farbkoordinaten gemäß dem CIE-Normfarbsystem von 1931 erzeugt wird. Für diesen Zweck ist die Verwendung von mindestens drei Leuchtdioden in der erfindungsgemäßen Leseleuchte vorteilhaft, die jeweils weißes Licht erzeugen. Beispielsweise kann dieselbe Farbtemperatur bzw. können dieselben Farbkoordinaten für das weiße Licht der Leseleuchte durch unterschiedliche Kombinationen von jeweils drei Leuchtdioden erreicht werden. So kann zum Beispiel eine Leuchtdiode, die weißes Licht mit stark gelblicher Tönung emittiert, mit zwei Leuchtdioden kombiniert werden, die weißes Licht mit bläulicher Tönung emittieren, oder es können zwei Leuchtdioden, die weißes Licht mit schwach gelblicher Tönung emittieren, mit einer Leuchtdiode kombiniert werden, die weißes Licht mit schwach bläulicher Tönung emittiert, um eine vorbestimmte gewünschte Farbtemperatur für das Licht der Leseleuchte zu erhalten. Vorzugsweise enthält die erfindungsgemäße Leseleuchte daher mehrere Leuchtdioden, die jeweils weißes Licht mit unterschiedlicher Farbtemperatur bzw. unterschiedlichen Farbkoordinaten erzeugen. Die Licht streuende Scheibe mischt und homogenisiert das von den unterschiedlichen Leuchtdioden emittierte Licht, so dass im Fernfeld der Leseleuchte weißes Licht der gewünschten Farbtemperatur bzw. mit den gewünschten Farbkoordinaten vorliegt.

Vorteilhafterweise sind die konischen Lichtleiter kegelstumpfartig ausgebildet, um eine Lichteinkoppelfläche und eine Lichtauskoppelfläche mit größeren Abmessungen als die Lichteinkoppelfläche zu ermöglichen. Die Lichtauskoppelflächen der konischen bzw. kegelstumpfartigen Lichtleiter sind vorzugsweise konvex gewölbt, um die Reflexion des aus den Lichtleitern austretenden Lichts an der Lichtauskoppelfläche zu minimieren.

Die erfindungsgemäße Leseleuchte weist vorzugsweise ein Gehäuse auf, in dessen Innenraum die Leuchtdioden und die konischen Lichtleiter angeordnet sind, um die vorgenannten Komponenten vor Beschädigung zu schützen und um die Leseleuchte als vorgefertigtes Modul in dem Kraftfahrzeug montieren zu können. Die Licht streuende Scheibe der erfindungsgemäßen Leseleuchte ist in vorteilhafter Weise als Abschlussscheibe ausgebildet, die eine Wand des Gehäuses bildet, durch die das von den Leuchtdioden generierte Licht austritt.

Vorzugsweise ist für jede Leuchtdiode jeweils ein konischer Lichtleiter vorgesehen, um einen möglichst gut gebündelten Lichtkegel mit möglichst homogener Mischung des von den Leuchtdioden emittierten Lichts im Fernfeld der Leseleuchte zu erhalten.

### Beschreibung der Figuren

Es zeigen:
- Figur 1: Eine Seitenansicht einer Leseleuchte gemäß dem bevorzugten Ausführungsbeispiel der Erfindung in teilweise geschnittener Darstellung

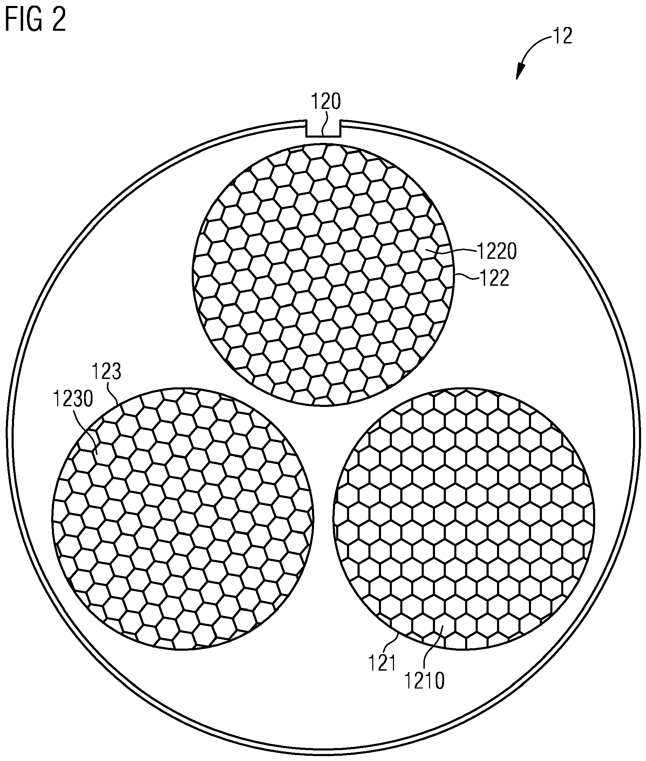

- Figur 2: Eine Draufsicht auf die Abschlussscheibe der in Figur 1 abgebildeten Leseleuchte
- Figur 3: Eine isometrische Darstellung der Oberseite der in Figur 1 abgebildeten Leseleuchte ohne Gehäuse
- Figur 4: Eine isometrische Darstellung der Unterseite der in Figur 1 abgebildeten Leseleuchte ohne Gehäuse
- Figur 5: Die hexagonale Struktur der Mikrolinsen des ersten Licht streuenden Abschnitts der Licht streuenden Abschlussscheibe der in Figur 1 abgebildeten Leseleuchte
- Figur 6: Die hexagonale Struktur der Mikrolinsen des zweiten Licht streuenden Abschnitts der Licht streuenden Abschlussscheibe der in Figur 1 abgebildeten Leseleuchte

### Beschreibung des bevorzugten Ausführungsbeispiels

Nachstehend wird die Erfindung anhand eines bevorzugten Ausführungsbeispiels näher erläutert.

Die in den Figuren schematisch dargestellte Leseleuchte gemäß dem bevorzugten Ausführungsbeispiel der Erfindung besitzt ein zylindrisches Gehäuse 1 mit einer Seitenwand 10, die den Mantel eines Kreiszylinders formt, und einem Boden 11 sowie einer Abschlussscheibe 12. In dem Innenraum 14 des Gehäuses 1 ist eine Montageplatte 2 mit drei darauf montierten Leuchtdioden 31, 32, 33 angeordnet. Zusätzlich sind auf der Montageplatte 2 auch die Komponenten (nicht abgebildet) einer Betriebsschaltung für die drei Leuchtdioden 31, 32, 33 montiert. Die Montageplatte 2 ist am Boden 11 des Gehäuses 1 beispielsweise mittels Schrauben oder Klebstoff fixiert. Alternativ kann die Montageplatte 2 aber auch an der Seitenwand 10 fixiert sein.

Die drei Leuchtdioden 31, 32, 33 sind auf der Montageplatte 2 derart angeordnet, dass sie die Eckpunkte eines Dreiecks bilden. Bei den Leuchtdioden 31, 32,33 handelt es sich um Leuchtdioden der Firma OSRAM, die unter dem Namen Power Topled LW E6SG verkauft werden. Diese Leuchtdioden 31, 32, 33 erzeugen während ihres Betriebs jeweils weißes Licht mit einem Lichtstrom von ca. 5 Im. Die Leuchtdioden 31, 32, 33 stammen aus unterschiedlichen Fertigungschargen und sind hinsichtlich der Farbkoordinaten des von ihnen erzeugten weißen Lichts derart ausgewählt und kombiniert, dass das von der Leseleuchte emittierte Licht weißes Licht mit den Farbkoordinaten x=0,314 und y=0,286 ist. Die Leuchtdioden 31, 32, 33 basieren auf der so genannten GaN-Technologie und besitzen einen maximalen optischen Wirkungsgrad von 50 lm/W bei einem Strom von 20 mA. Die Leuchtdioden 31, 32, 33 besitzen ein Silikonharz-Package, aber keine optische Linse. Die Lichtabgabe der Leuchtdioden 31, 32, 33 erfolgt über ihre von der Montageplatte 2 abgewandte Oberfläche, die hier nachstehend auch als Oberseite 310, 320 bzw. 330 der jeweiligen Leuchtdiode 31, 32 bzw. 33 bezeichnet wird. Jede der Leuchtdioden ist daher näherungsweise ein so genannter Lambert-Strahler. Der Viewing angle (Betrachtungswinkel, gemessen bzgl. der Flächennormalen der Oberseite der Leuchtdiode), bei dem noch 50% des maximalen Lichtstroms der Leuchtdiode vorliegen, beträgt 120 Grad. Oder mit anderen Worten formuliert, auf dem Mantel eines Kegels, dessen Spitze auf der Oberseite der Leuchtdiode 31, 32 oder 33 steht und dessen Öffnungswinkel 120 Grad beträgt, liegen noch 50% des maximalen Lichtstroms der Leuchtdiode vor, wobei der maximale Lichtstrom in der Kegelachse gemessen wird. Das bedeutet, dass die Leuchtdioden 31, 32, 33 während ihres Betriebs einen relativ breit gefächerten Lichtkegel erzeugen. Um diesen breit gefächerten Lichtkegel zu bündeln und die Divergenz des von den Leuchtdioden 31, 32, 33 erzeugten Lichts zu reduzieren, sind drei konische Lichtleiter 41, 42, 43 vorgesehen, deren Lichteinkoppelfläche 411, 421, 431 jeweils im geringen Abstand von der Oberseite 310, 320 oder 330 der jeweiligen Leuchtdiode 31, 32 oder 33 angeordnet ist. Der Abstand zwischen der Oberseite 310, 320, 330 der Leuchtdioden 31, 32, 33 und der Lichteinkoppelfläche 411, 421, 431 der konischen Lichtleiter 41, 42, 43 ist so klein wie möglich und vorzugsweise nicht größer als 0,3 mm, um Lichtverluste beim Übertritt in die Lichtleiter 41, 42, 43 zu minimieren.

Die drei konischen Lichtleiter 41, 42, 43 bestehen jeweils aus Polykarbonat (PC). Die konischen Lichtleiter 41, 42, 43 sind jeweils kegelstumpfartig ausgebildet. Ihre Lichteinkoppelfläche 411, 421, 431 besitzt jeweils einen Durchmesser von 1,3 mm. Die drei konischen Lichtleiter 41, 42, 43 besitzen außerdem jeweils eine Lichtauskoppelfläche 412, 422, 432, die der Lichteinkoppelfläche 411, 421, 431 des jeweiligen Lichtleiters 41, 42, 43 gegenüberliegt. Die Lichtauskoppelflächen 412, 422, 432 sind konvex gewölbt und besitzen einen Krümmungsradius von jeweils 5,88 mm. Der maximale Durchmesser der konischen bzw. kegelstumpfartigen Lichtleiter 41, 42, 43 im Bereich der Lichtauskoppelflächen 412, 422, 432 beträgt 7 mm. Die Höhe jedes konischen Lichtleiters 41, 42, 43 von der Lichteinkoppelfläche 411, 421, 431 bis zur Lichtauskoppelfläche 412, 422, 432 beträgt jeweils 8,2 mm. Das von den Leuchtdioden 31, 32, 33 emittierte Licht tritt in den jeweiligen Lichtleiter 41, 42 bzw. 43 über seine Lichteinkoppelfläche 411, 421 bzw. 4431 ein und verlässt die Lichtleiter 41 ,42 bzw. 43 über deren Lichtauskoppelfläche 412, 422 bzw. 432.

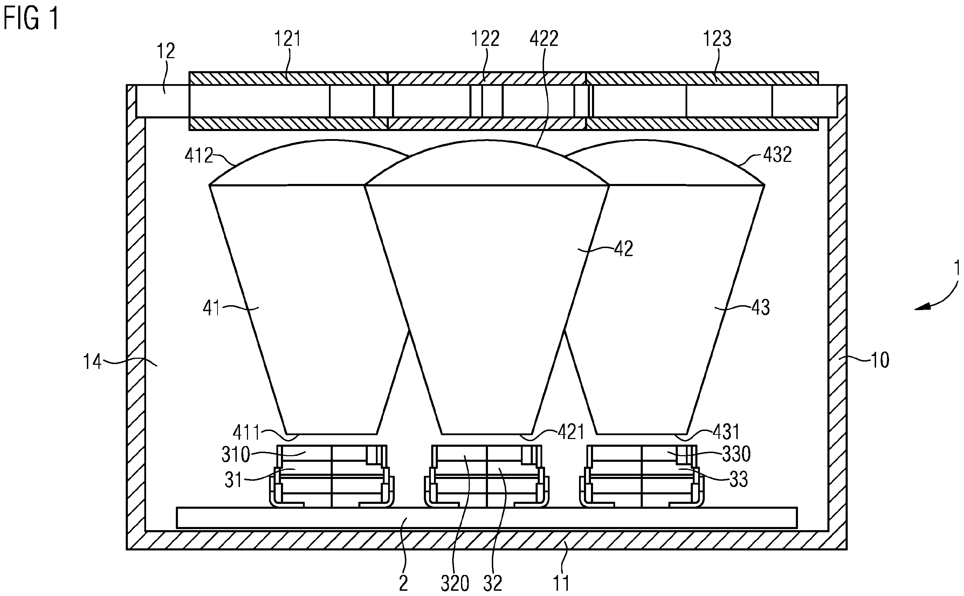

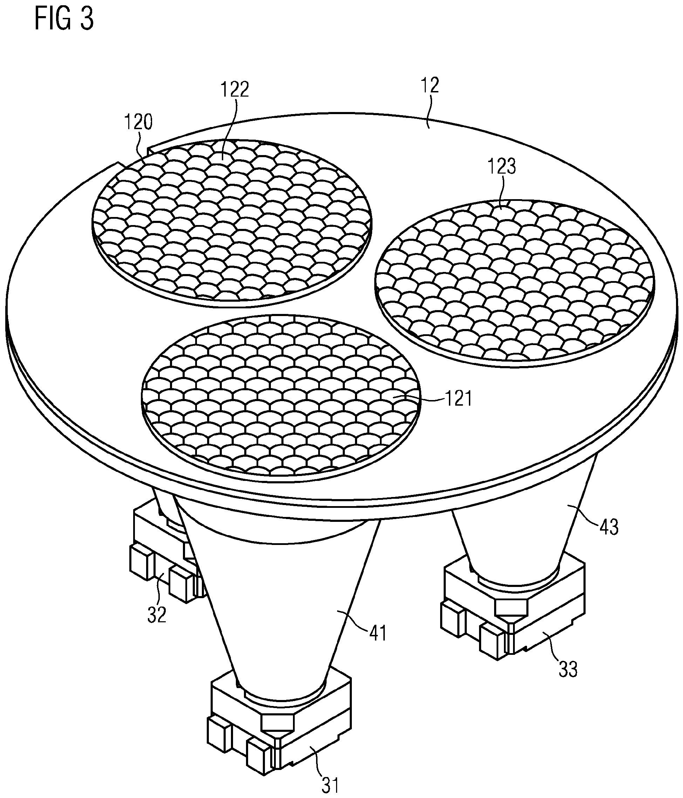

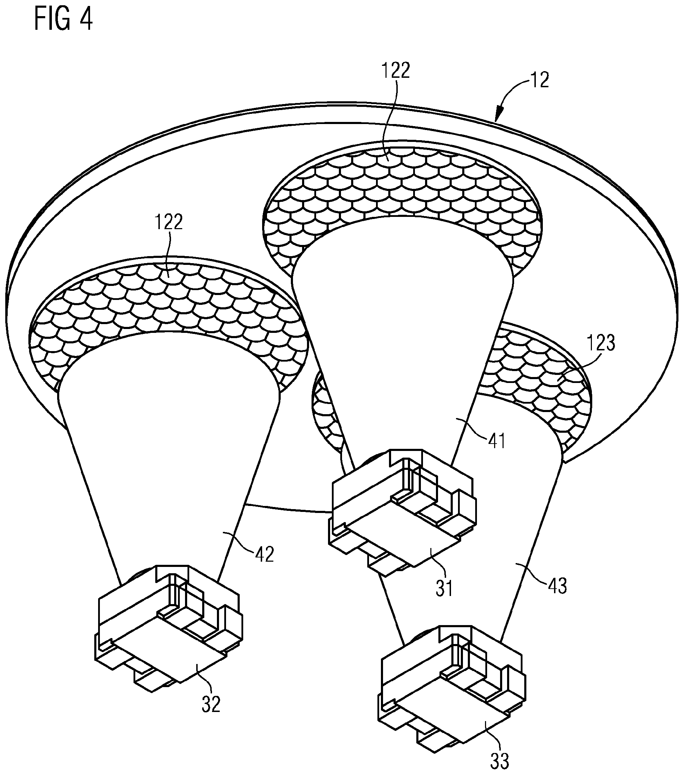

Bei der Abschlussscheibe 12 des Gehäuses 1 handelt es sich um eine Licht streuende Scheibe, die in einem Abstand von ungefähr 0,4 mm zu den Lichtauskoppelflächen 412, 422, 432 der konischen Lichtleiter 41, 42, 43 angeordnet ist. Die Abschlussscheibe 12 verschließt die dem Boden gegenüberliegende Stirnseite des zylindrischen Gehäuses 1 und ihre drei Licht streuenden Abschnitte 121, 122, 123 homogenisieren und mischen das Licht, das aus den Lichtauskoppelflächen 412, 422, 432 der drei konischen Lichtleiter 41, 42, 43 austritt, so dass im Fernfeld der Leseleuchte, das heißt ein paar Dezimeter entfernt von der Abschlussscheibe 12 und von der Leseleuchte, während des Betriebs homogenes weißes Licht mit den vorgenannten Farbkoordinaten X=0,314 und y=0,286 verfügbar ist. Jeder Lichtauskoppelfläche 412, 422, 432 der konischen Lichtleiter 41, 42, 43 ist ein Licht streuender Abschnitt 121, 122, 123 in der Abschlussscheibe 12 zugeordnet. Jeder Licht streuende Abschnitt 121, 122, 123 ist einer der Lichtauskoppelflächen 412, 422, 432 der konischen Lichtleiter 41, 42, 43 zugeordnet. Daher bedeckt jeder Licht streuende Abschnitt 121, 122, 123 einen Flächenbereich der Abschlussscheibe 12, der größer ist als die jeweilige Lichtauskoppelfläche 412, 422 bzw. 432 der konischen Lichtleiter 41, 42, 43. Vorzugsweise bedecken die Licht streuende Abschnitte 121, 122, 123 der Abschlussscheibe 12 jeweils eine Kreisscheibe mit einem Durchmesser von 8 mm. In der Darstellung gemäß den Figuren 1, 3 und 4 sind die Licht streuenden Abschnitte 121, 122, 123 genau über den Lichtauskoppelflächen 412, 422,432 der konischen Lichtleiter 41, 42, 43 platziert. Die Abschlussscheibe 12 besteht aus Polymethylmethacrylat (PMMA) und besitzt eine Dicke von 0,8 mm sowie einen Durchmesser von 20 mm. Das vorgenannte Kunststoffmaterial der Abschlussscheibe ist auch unter dem Namen Plexiglas oder Acrylglas bekannt. Die Licht streuenden Abschnitte 121, 122, 123 der Abschlussscheibe 12 bestehen jeweils aus einer Vielzahl von kugelhaubenartigen Mikrolinsen 1210, 1220, 1230, die in einer hexagonalen oder wabenartigen Struktur in den Licht streuenden Abschnitten 121, 122, 123 angeordnet sind und jeweils einen Krümmungsradius von 0,5 mm und eine Höhe von 0,3 mm über der außerhalb der Licht streuenden Abschnitte 121, 122, 123 liegenden Oberfläche der Abschlussscheibe 12 besitzen. Der Abstand zwischen den Mittelpunkten zweier benachbarter Mikrolinsen bzw. Hexagone in jedem Licht streuenden Abschnitt 121, 122, 123 der Abschlussscheibe 12 beträgt 0,7 mm. Die Licht streuenden Abschnitte 121, 122, 123 mit den Mikrolinsen 1210, 1220, 1230 sind auf beiden Seiten der Abschlussscheibe 12 angeordnet. Der außerhalb der Licht streuenden Abschnitte 121, 122, 123 liegende Oberflächenbereich der Abschlussscheibe 12 ist beispielsweise durchsichtig ausgebildet. Alternativ kann er aber auch opak sein.

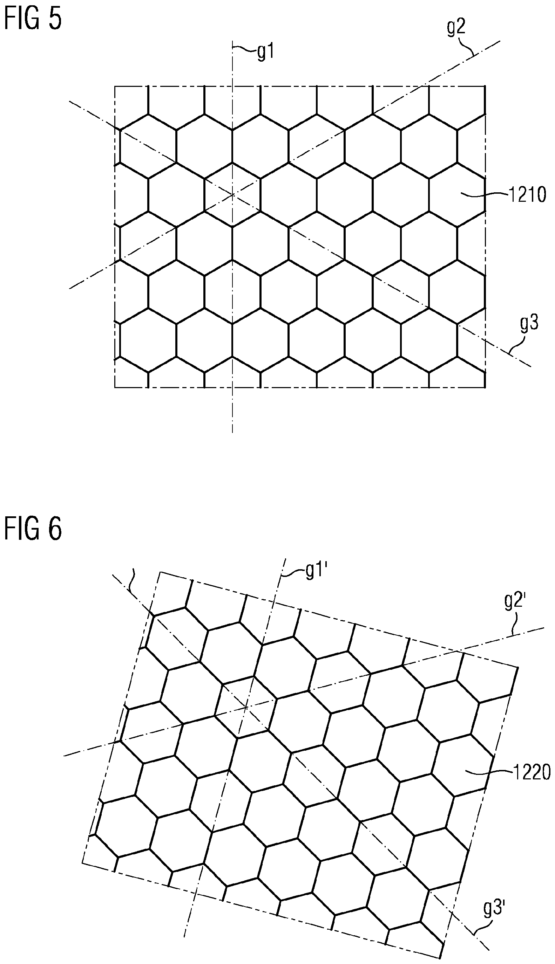

Die hexagonalen Strukturen der zu unterschiedlichen Licht streuenden Abschnitten 121, 122 bzw. 123 gehörenden Mikrolinsen 1210, 1220 bzw. 1230 sind um einen Winkel von 20 Grad gegeneinander verdreht angeordnet. Dieser Sachverhalt ist schematisch in den Figuren 5 und 6 für die Licht streuenden Abschnitte 121 und 122 dargestellt.

Die hemisphärischen Mikrolinsen 1210 des ersten Licht streuenden Abschnitts 121 sind in einer hexagonalen Struktur angeordnet, deren Ausrichtung im Raum, beispielsweise bezüglich eines Durchmessers der Abschlussscheibe 12, schematisch durch die drei Geraden g1, g2 und g3 definiert ist (Fig. 5). Beispielsweise verläuft die Gerade g1 parallel zu einem Durchmesser der Abschlussscheibe 12. Die hemisphärischen Mikrolinsen 1220 des zweiten Licht streuenden Abschnitts 122 sind ebenfalls in einer hexagonalen Struktur angeordnet, deren Ausrichtung im Raum durch die drei Geraden g1', g2' und g3' gekennzeichnet ist (Fig. 6). Die Geraden g1', g2' und g3' bilden mit den Geraden g1, g2 und g3 jeweils einen Winkel von 20 Grad. Das heißt, die hexagonalen Strukturen der beiden Licht streuenden, mit Mikrolinsen 1210 bzw. 1220 versehenen Abschnitte 121, 122 sind verdreht gegeneinander angeordnet, und zwar im vorliegenden Fall um einen Winkel von 20 Grad. Eine analoge Aussage gilt auch für die hexagonale Struktur der Mikrolinsen 1230 des dritten Licht streuenden Abschnitts 123 der Licht streuenden Abschlussscheibe 12. Die hexagonale Struktur der Mikrolinsen 1230 des dritten Licht streuenden Abschnitts 123 sind ebenfalls um einen Winkel von 20 Grad gegenüber der hexagonalen Struktur der Mikrolinsen 1210 des ersten Licht streuenden Abschnitts 121 verdreht angeordnet. Demzufolge sind die die hexagonalen Strukturen des zweiten 122 und dritten Licht streuenden Abschnitts um einen Winkel von 40 Grad gegeneinander verdreht angeordnet. Aufgrund der der Symmetrie der hexagonalen Struktur kann aber zwischen einer Verdrehung um 20 Grad und einer Verdrehung um 40 Grad nicht unterschieden werden. Wie nämlich aus Figur 5 oder 6 sofort deutlich wird, überführt jede Drehung der hexagonalen Struktur um eine Rotationsachse, die durch den Mittelpunkt eines Hexagons verläuft, um einen Winkel von 60 Grad die hexagonale Struktur in sich selbst. Daher sind die hexagonalen Strukturen der drei mit Mikrolinsen 1210, 1200 ,1230 versehenen Abschnitte 121, 122, 123 der Licht streuenden Abschlussscheibe 12 jeweils um einen Winkel von 20 Grad gegeneinander verdreht angeordnet.

Am Rand der Abschlussscheibe 12 ist eine Aussparung 120 angeordnet, die einen passgerechten, an der Seitenwand 10 des Gehäuses 1 angeformten Steg aufnimmt.

Die Erfindung beschränkt sich nicht auf das oben näher erläuterte Ausführungsbeispiel. Insbesondere bezeichnet der Begriff Leuchtdiode nicht nur den oben zitierten speziellen Typ von Leuchtdioden, sondern steht beispielsweise auch für einen Leuchtdiodenchip oder für ein Leuchtdioden-Array. Außerdem kann auch das Licht von mehreren Leuchtdioden in die Lichteinkoppelfläche eines konischen Lichtleiters eingekoppelt werden. Beispielsweise kann das Licht von einer Leuchtdiodeneinheit, bestehend aus mindestens drei Halbleiterlichtquellen, die rotes, grünes und blaues Licht emittieren, oder bestehend aus mindestens zwei Halbleiterlichtquellen, die mintgrünes und rotes bzw. orangefarbenes Licht emittieren, in die Lichtleitereinkoppelfläche eines einzigen konischen Lichtleiters eingekoppelt werden. Mittels der vorgenannten Kombinationen von mindestens drei Halbleiterlichtquellen, die rotes, grünes und blaues Licht emittieren, oder der Kombination von mindestens zwei Halbleiterlichtquellen, die mintgrünes und rotes bzw. orangefarbenes Licht emittieren, kann ebenfalls weißes Licht erzeugt werden. Weiterhin kann beispielsweise insbesondere im Fall von Leuchtdioden-Arrays das von den Lichtquellen eines Leuchtdioden-Arrays emittierte Licht in einen einzigen konischen Lichtleiter eingekoppelt werden.

## Patentansprüche

1. Leseleuchte für den Innenraum von Kraftfahrzeugen mit
- mehreren Leuchtdioden (31, 32, 33), die auf einer Montageplatte (2) angeordnet sind, und mit
- mehreren konischen Lichtleitern (41, 42, 43), wobei jeder konische Lichtleiter (41, 42, 43) eine, mindestens einer Leuchtdiode (31, 32, 33) zugewandte Lichteinkoppelfläche (411, 421, 431) und eine Lichtauskoppelfläche (412, 422, 432) aufweist, und mit
- einer Licht streuenden Scheibe (12), welche die Lichtauskoppelflächen (412, 422, 432) der konischen Lichtleiter (41, 42, 43) abdeckt, wobei die Licht streuende Scheibe (12) mit Mikrolinsen versehene Abschnitte (121, 122, 123) besitzt, die den Lichtauskoppelflächen (412, 422, 432) der konischen Lichtleiter (41, 42, 43) zugeordnet sind,
**dadurch gekennzeichnet, dass** die mit Mikrolinsen versehenen Abschnitte (121, 122, 123) der Licht streuenden Scheibe (12) jeweils eine Fläche einnehmen, die größer oder gleich der jeweiligen Lichtauskoppelfläche (412, 422, 432) des entsprechenden konischen Lichtleiters (41, 42, 43) ist, wobei die Mikrolinsen (1210, 1220, 1230) jedes mit Mikrolinsen versehenen Abschnitts (121, 122, 123) jeweils in einer hexagonalen Struktur angeordnet sind, und wobei die hexagonalen Strukturen der mit Mikrolinsen versehenen Abschnitte (121, 122, 123) gegeneinander verdreht angeordnet sind.

2. Leseleuchte nach Anspruch 1, wobei die konischen Lichtleiter (41, 42, 43) kegelstumpfartig ausgebildet sind.

3. Leseleuchte nach Anspruch 1 oder 2, wobei die Lichtauskoppelflächen (412, 422, 432) der konischen Lichtleiter (41, 42, 43) jeweils größer als ihre Lichteinkoppelflächen (411, 421, 431) sind und die Lichtauskoppelflächen (412, 422, 432) konvex gewölbt sind.

4. Leseleuchte nach einem der Ansprüche 1 bis 3, wobei die Leuchtdioden (31, 32, 33) als Leuchtdioden ausgebildet sind, die weißes Licht emittieren.

5. Leseleuchte nach Anspruch 4, wobei die Leuchtdioden (31, 32, 33) während ihres Betriebs jeweils weißes Licht mit unterschiedlichen Farbkoordinaten erzeugen.

6. Leseleuchte nach einem der Ansprüche 1 bis 5, wobei die Leseleuchte ein Gehäuse (1) aufweist, in dessen Innenraum (14) die Leuchtdioden (31, 32, 33) und die konischen Lichtleiter (41, 42, 43) angeordnet sind.

7. Leseleuchte nach Anspruch 6, wobei die Licht streuende Scheibe (12) als Abschlussscheibe ausgebildet ist, die eine Wand des Gehäuses (1) bildet.

8. Leseleuchte nach einem der Ansprüche 1 bis 7, wobei jeweils ein konischer Lichtleiter (41, 42, 43) für jede der Leuchtdioden (31, 32, 33) vorgesehen ist.

## Claims

1. Reading luminaire for the interior of motor vehicles, comprising
- a plurality of light-emitting diodes (31, 32, 33) arranged on a mounting plate (2), and comprising
- a plurality of conical optical waveguides (41, 42, 43), wherein each conical optical waveguide (41, 42, 43) has a light coupling-in surface (411, 421, 431) facing at least one light-emitting diode (31, 32, 33), and a light coupling-out surface (412, 422, 432), and comprising
- a light-scattering sheet (12) covering the light coupling-out surfaces (412, 422, 432) of the conical optical waveguides (41, 42, 43), wherein the light-scattering sheet (12) has sections (121, 122, 123) provided with microlenses, said sections being assigned to the light coupling-out surfaces (412, 422, 432) of the conical optical waveguides (41, 42, 43), **characterized in that** the sections (121, 122, 123) of the light-scattering sheet (12) provided with microlenses each occupy an area greater than or equal to that of the respective light coupling-out surface (412, 422, 432) of the corresponding conical optical waveguide (41, 42, 43), wherein the microlenses (1210, 1220, 1230) of each section (121, 122, 123) provided with microlenses are arranged in each case in a hexagonal structure, and wherein the hexagonal structures of the sections (121, 122, 123) provided with microlenses are arranged in a manner rotated relative to one another.

2. Reading luminaire according to Claim 1, wherein the conical optical waveguides (41, 42, 43) are embodied in a truncated-cone-like fashion.

3. Reading luminaire according to Claim 1 or 2, wherein the light coupling-out surfaces (412, 422, 432) of the conical optical waveguides (41, 42, 43) are in each case larger than their light coupling-in surfaces (411, 421, 321) and the light coupling-out surfaces (412, 422, 432) are convexly curved.

4. Reading luminaire according to any of Claims 1 to 3, wherein the light-emitting diodes (31, 32, 33) are embodied as light-emitting diodes which emit white light.

5. Reading luminaire according to Claim 4, wherein the light-emitting diode (31, 32, 33) in each case generate white light having different colour coordinates during their operation.

6. Reading luminaire according to any of Claims 1 to 5, wherein the reading luminaire has a housing (1), in the interior (14) of which the light-emitting diodes (31, 32, 33) and the conical optical waveguides (41, 42, 43) are arranged.

7. Reading luminaire according to Claim 6, wherein the light-scattering sheet (12) is embodied as a closure sheet forming a wall of the housing (1).

8. Reading luminaire according to any of Claims 1 to 7, wherein a respective conical optical waveguide (41, 42, 43) is provided for each of the light-emitting diodes (31, 32, 33).

## Revendications

1. Lampe de lecture pour l'intérieur de véhicules automobiles avec plusieurs diodes électroluminescentes (31, 32, 33) disposées sur une plaque de montage (2), et avec plusieurs conduits de lumière coniques (41, 42, 43), dans laquelle chaque conduit de lumière conique (41, 42, 43) présente une surface de couplage de lumière (411, 421, 431) orientée vers au moins une diode électroluminescente (31, 32, 33) et une surface de découplage de lumière (412, 422, 432), et avec un disque de diffusion de la lumière (12), lequel couvre les surfaces de découplage de la lumière (412, 422, 432) des conduits de lumière coniques (41, 42, 43), dans laquelle le disque de diffusion de la lumière (12) possède des sections dotées de microlentilles (121, 122, 123) orientées vers les surfaces de découplage de la lumière (412, 422, 432) des conduits de lumière coniques (41, 42, 43), **caractérisée en ce que** les sections dotées de microlentilles (121, 122, 123) du disque de diffusion de la lumière (12) occupent respectivement une surface supérieure ou égale à la surface de découplage de la lumière respective (412, 422, 432) du conduit de lumière conique correspondant (41, 42, 43), dans laquelle les microlentilles (1210, 1220, 1230) de chaque section dotée de microlentilles (121, 122, 123) sont respectivement disposées selon une structure hexagonale, et dans laquelle les structures hexagonales des sections dotées de microlentilles (121, 122, 123) sont disposées de manière déformée l'une par rapport à l'autre.

2. Lampe de lecture selon la revendication 1, dans laquelle les conduits de lumière coniques (41, 42, 43) sont exécutés de manière tronconique.

3. Lampe de lecture selon la revendication 1 ou 2, dans laquelle les surfaces de découplage de la lumière (412, 422, 432) des conduits de lumière coniques (41, 42, 43) sont respectivement plus grandes que leurs surfaces de couplage de la lumière (411, 421, 431) et les surfaces de découplage de la lumière (412, 422, 432) sont bombées de façon convexe.

4. Lampe de lecture selon l'une des revendications 1 à 3, dans laquelle les diodes électroluminescentes (31, 32, 33) sont exécutées sous la forme de diodes électroluminescentes qui émettent de la lumière blanche.

5. Lampe de lecture selon la revendication 4, dans laquelle les diodes électroluminescentes (31, 32, 33) génèrent durant leur fonctionnement de la lumière blanche dont les coordonnées de chromaticité varient.

6. Lampe de lecture selon l'une des revendications 1 à 5, dans laquelle la lampe de lecture présente un carter (1) dans l'espace intérieur (14) duquel les diodes électroluminescentes (31, 32, 33) et les conduits de lumière coniques (41, 42, 43) sont disposés.

7. Lampe de lecture selon la revendication 6, dans laquelle le disque de diffusion de la lumière (12) est exécuté sous forme de lentille extérieure, qui constitue une paroi (1) du carter.

8. Lampe de lecture selon l'une des revendications 1 à 7, dans laquelle un conduit de lumière conique (41, 42, 43) est respectivement prévu pour chaque diode électroluminescente (31, 32, 33).
